# EUROPEAN PATENT SPECIFICATION

(11) **EP 3 376 580 B1**
(45) Date of publication and mention of the grant of the patent: **06.05.2020**
(21) Application number: 17161369.8
(22) Date of filing: 16.03.2017
(51) Int. Cl.: H01M 10/052, H01M 10/48, H01M 10/625, H01M 10/615, H01M 10/627

(54) **METHOD FOR OPERATING A BATTERY SYSTEM AND BATTERY SYSTEM**
VERFAHREN ZUM BETREIBEN EINES BATTERIESYSTEMS UND BATTERIESYSTEM
PROCÉDÉ DE FONCTIONNEMENT D'UN SYSTÈME DE BATTERIE ET SYSTÈME DE BATTERIE

(43) Date of publication of application: 19.09.2018
(73) Proprietor: Robert Bosch GmbH, 70442 Stuttgart (DE); GS Yuasa International Ltd., Kisshoin, Minami-ku, Kyoto-shi, Kyoto 601-8520 (JP)
(72) Inventor: Gansemer, Michael, 74366 Kirchheim (DE); Woll, Christoph, 70839 Gerlingen (DE)
(74) Representative: Isarpatent

(56) References cited:
- EP-A1- 2 908 378
- KR-A- 20150 071 758

## Description

The invention relates to a method for operating a battery system, comprising a battery unit with several battery modules and a starter battery for heating the battery modules of the battery unit. The invention also relates to a battery system, comprising a battery unit with several battery modules, a starter battery for heating the battery modules of the battery unit and a control unit for controlling and supervising the battery unit and the starter battery.

### State of the Art

Electrical energy can be stored by means of batteries. Batteries convert chemical energy into electrical energy. Particularly, rechargeable batteries are known to be able to be charged and discharged several times. Battery modules comprise several battery cells that are connected electrically in series or in parallel. Battery units or battery systems comprise several battery modules that are connected electrically in series.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid electric vehicles (PHEV). Lithium ion battery cells have a positive electrode called cathode, and a negative electrode called anode. The anode and the cathode are divided from one another by means of a separator. The electrodes and the separator are surrounded by an electrolyte.

Battery systems with lithium ion battery cells, in particular in motor vehicles, are operated at a wide temperature range. However, at low temperatures, for example below 0°C, the available power of said battery cells is lower than maximum power. Maximum power is only available at higher temperature. Said battery cells have for example an electrolyte that is in liquid state.

Also, battery cells are known that have an electrolyte that is in solid state and therefore is called a solid electrolyte. Such battery cells have higher energy density than conventional lithium ion battery cells. However, such battery cells are operable optimally at relative high temperature, for example more than 70°C.

At low temperatures, for example below 0°C, such battery cells have a relatively high internal resistance and are therefore not operable. Batteries with such battery cells are also called medium temperature batteries.

For example, ZEBRA (Zero Emission Battery Research Activities) batteries are known that have relatively high energy density and a solid electrolyte. A ZEBRA battery comprises rechargeable battery cells that are operable optimally at temperatures higher than 260 °C. Electrical energy for heating the ZEBRA battery is provided by a control unit. Depending on size of the battery and temperature, a heating process may last up to several hours.

Further reference for state of the art is given in M. Geske (IFF), P. Komarnicki (IFF), D. Filzek (CUBE), S. Funke (IWES): Elektro-KFZ als Speicher 15.02.2011, in particular chapter: 5.3.7 ZEBRA-Batterie.

Document JP 2015-156765 discloses an electric vehicle and an electric vehicle heating method. The electric vehicle comprises a battery and a capacitor.

Furthermore, a heater is provided for heating the battery with electric power supplied by the capacitor.

Document US 2011/00288704 discloses a method for heating a high voltage vehicle battery. Thereat, a battery heating system includes a battery heater and a low voltage vehicle battery. To heat the high voltage vehicle battery, electric energy from the low voltage vehicle battery is used to power the battery heater.
Documents EP2908378 and KR20150071758 disclose methods for individually heating battery modules of a battery pack.

### Disclosure of the Invention

A method for operating a battery system is proposed. The battery system comprises a battery unit with several battery modules and a starter battery for heating the battery modules of the battery unit. That means, electric energy stored in the starter battery is used to heat the battery modules of the battery unit. For example, the battery modules comprise battery cells with solid electrolyte that can only be operated optimally at relatively high temperature, for example over 70 °C. The starter battery for example comprises lithium ion battery cells with liquid electrolyte that are operable at temperatures below 0° C.

Thereat, a group of battery modules to be heated initially is selected. Different criteria can be considered when selecting the group of battery modules to be heated initially from all battery modules of the battery unit.

Then, the selected group of battery modules is heated initially via the starter battery until the selected group of battery modules has reached a predetermined first temperature level. That means, electric energy stored in the starter battery is used to heat the selected group of battery modules of the battery unit. The predetermined first temperature level is for example 0 °C.

Afterwards, the remaining battery modules are heated until all battery modules of the battery unit have reached a predetermined second temperature level. In a case, which is not part of the invention as defined by the appended claims, the predetermined second temperature level is for example 35 °C.

The group of battery modules to be heated initially does not comprise all battery modules of the battery unit. The battery unit comprises at least one battery module to be heated initially and at least one remaining battery module.

According to a possible embodiment of the invention, the group of battery modules to be heated initially comprises precisely one battery module of the battery unit.

According to an advantageous embodiment of the invention, the remaining battery modules are heated via the starter battery until all battery modules have reached the predetermined second temperature level. That means, electric energy stored in the starter battery is used to heat the remaining battery modules of the battery unit.

According to another advantageous embodiment of the invention, the remaining battery modules are heated via the selected group of battery modules until all battery modules have reached the predetermined second temperature level. That means, electric energy stored in the selected group of battery modules is used to heat the remaining battery modules of the battery unit.

As mentioned already, different criteria can be considered when selecting the group of battery modules to be heated initially from all battery modules of the battery unit. Also, various combinations of different criteria can be considered when selecting the group of battery modules to be heated initially.

According to the invention, the group of battery modules to be heated initially is selected depending on an actual temperature of the battery modules of the battery unit.

Additionally, the group of battery modules to be heated initially is selected depending on an actual state of charge of the battery modules of the battery unit.

Additionally, the group of battery modules to be heated initially is selected depending on a frequency of former selections of the battery modules of the battery unit.

Preferably, the second temperature level is predetermined such that the battery unit has 50% of maximum power when all battery modules have reached the predetermined second temperature level. When 50% of the maximum power of the battery unit is available, then the battery unit can be operated and can be heated up further during operation.

According to the invention, the first temperature level is equal to the second temperature level.

After all battery modules have reached the predetermined second temperature level, according to an advantageous further development of the invention, the starter battery is charged via the battery unit. That means, electric energy stored in the battery modules of the battery unit is used to charge the starter battery that has lost electric energy during heating the battery modules.

After all battery modules have reached the predetermined second temperature level, according to another advantageous further development of the invention, the battery modules are heated further via the starter battery. That means, electric energy still stored in the starter battery is used to heat the battery modules of the battery unit further.

Furthermore, a battery system is proposed, which comprises a battery unit with several battery modules, a starter battery for heating the battery modules of the battery unit and a control unit for controlling and supervising the battery unit and the starter battery.

According to the invention, the control unit comprises a managing unit that is designed to execute the method according to the invention. In particular, the managing unit is designed to select a group of battery modules to be heated initially. Thereat, different criteria are considered by the managing unit when selecting the group of battery modules to be heated initially from all battery modules of the battery unit. Such criteria are inter alia an actual temperature of the battery modules, an actual state of charge of the battery modules and a frequency of former selections of the battery modules.

For example, the battery modules comprise battery cells with solid electrolyte that have a relatively high energy density but that can only be operated optimally at relatively high temperature, for example over 70 °C.

For example, the starter battery comprises lithium ion battery cells that are operable at temperatures below 0° C and that still have a sufficient energy density to heat the battery modules of the battery unit. Such battery cells for example have liquid electrolyte.

The method according to the invention as well as the battery system according to the invention is usable advantageously in an electric vehicle (EV), in a hybrid electric vehicle (HEV), in a plug-in hybrid vehicle (PHEV), in a stationary battery or in a battery in a marine application.

### Advantages of the Invention

The method according to the invention allows heating a medium temperature battery, in particular a battery comprising battery cells with solid electrolyte, to a temperature at which the medium temperature battery is operable optimally in relatively short time. By dint of the managing unit, a sequence for heating single battery modules of the battery unit can be calculated to get the medium temperature battery to a sufficient temperature at minimum time. The battery system can be taken in an operational state automatically, for example by dint of a car key, remote control a mobile phone app. Availability of the battery system is increased, in particular in special utilization cases like start procedure after long standstill at low temperature. As the battery system does not need to be kept on optimal operational temperature during long standstill, economy and efficiency are improved. Furthermore, the battery system is independent of stationary charging stations. Material and costs for thermal insulation of the battery system are reduced. Hence, operating costs of the battery system according to the invention are reduced advantageously.

### Brief Description of the Drawings

For a better understanding of the aforementioned embodiments of the invention as well as additional embodiments thereof, reference should be made to the description of embodiments below, in conjunction with the appended drawings showing:

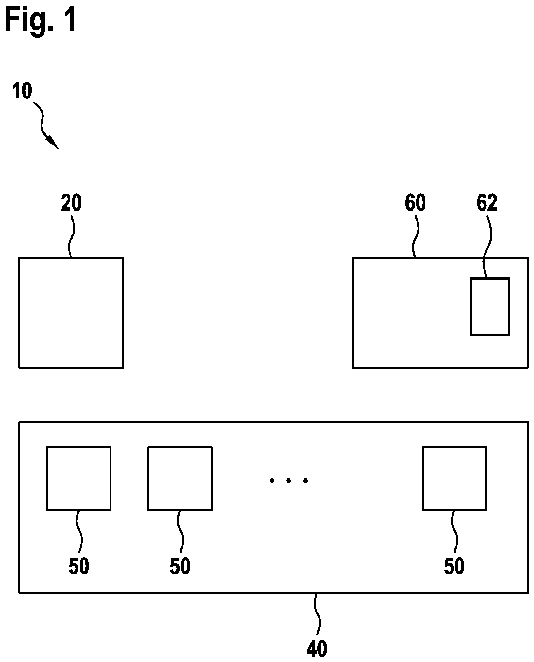

- Figure 1: a schematic view at a battery system.

### Description of Embodiments

Hereinafter, preferred embodiments of the present invention will be described with reference to the drawings. The drawings only provide schematic views of the invention. Like reference numerals refer to corresponding parts, elements or components throughout the figures, unless indicated otherwise.

Figure 1 shows a schematic view at a battery system 10. The battery system 10 comprises a battery unit 40 with several battery modules 50, a starter battery 20 and a control unit 60 for controlling and supervising the battery unit 40 and the starter battery 20. Thereat, the control unit 60 comprises inter alia a managing unit 62.

Furthermore, the battery system 10 comprises several temperature sensors which are not shown here. In particular, every battery module 50 of the battery unit 40 is equipped with at least one temperature sensor. The temperature sensors are connected to the control unit 60 and the control unit 60 comprises appropriate circuitry to process signals from the temperature sensors and to calculate temperatures of the single battery modules 50.

The battery unit 40 is designed as a medium temperature battery that is operable optimally at temperatures above 70 °C. The battery modules 50 of the battery unit 40 comprise battery cells with solid electrolyte that are connected electrically. Also, the battery modules 50 are connected electrically. Heating elements are provided for heating the battery unit 40. Thereat, every battery module 50 is equipped with a separate heating element such that the battery modules 50 of the battery unit 40 can be heated separately.

The starter battery 20 comprises battery cells that are operable at temperatures below 0° C. The battery cells of the starter battery 20 have an electrolyte that is in liquid state. However, at low temperatures below 0°C, the available power of said battery cells is lower than the maximum available power. The starter battery 20 inter alia serves for heating the battery modules 50 of the battery unit 40 via the heating elements.

The managing unit 62 of the control unit 60 receives the temperatures of the single battery modules 50 via the control unit 60. Furthermore, the managing unit 62 actuates the starter battery 20 and the heating elements of the battery modules 50. Hence, the managing unit 62 may determine heating of the battery modules 50 separately.

In the following, a method for operating the battery system 10 is described. Said method in particular serves for heating the battery unit 40 to a power level at which the battery unit 40 is operable satisfactorily, for example to drive an electric vehicle. Here it is presumed, that the temperature of the battery system including the battery modules 50 as well as the starter battery 20 has fallen below 0 °C, for example to -5 °C.

In the beginning, a status request of the battery modules 50 and the starter battery 20 is executed by the managing unit 62. Thereat, in particular values of actual temperatures and actual state of charge are requested and stored in the managing unit 62. Furthermore, the managing unit 62 comprises several counters, whereat a separate counter is assigned to every battery module 50 of the battery unit 40.

Then, a group of battery modules 50 to be heated initially is selected by the managing unit 62 from all battery modules 50 of the battery unit 40. Thereat, different criteria are considered by the managing unit 62 when selecting the group of battery modules 50 to be heated initially. In particular, the managing unit 62 considers the actual temperature of the battery modules 50 and the actual state of charge of the battery modules 50.

When a certain battery module 50 is selected to the group of battery modules 50 to be heated initially, the counter assigned to this battery module 50 is incremented. According to the invention, the managing unit 62 also considers the value stored in said counter which represents the frequency of former selections of this battery module 50.

The group of battery modules 50 to be heated initially is selected by the managing unit 62 such that the battery modules 50 of the battery unit 40 are stressed evenly and homogenously. Hence, the battery modules 50 of the battery unit 40 are aged evenly and homogenously.

The group of battery modules 50 to be heated initially may comprise precisely one battery module 50 or several battery modules 50 of the battery unit 40. However, the group of battery modules 50 to be heated initially does not comprise all battery modules 50 of the battery unit 40. The battery unit 40 comprises at least one remaining battery module 50.

Then, the managing unit 62 actuates the starter battery 20 and the heating elements to heat up the selected group of battery modules 50 initially. Thereat, selected group of battery modules 50 is heated until the selected group of battery modules 50 has reached a predetermined first temperature level. Thereat, electric energy stored in the starter battery 20 is used to heat up the selected group of battery modules 50 and hence, the state of charge of the starter battery 20 is reduced.

Then, the remaining battery modules 50 are heated until all battery modules 50 of the battery unit 40 have reached a predetermined second temperature level. There are several possible procedures to heat up the remaining battery modules 50. Said possible procedures can be executed separately or in combined with one another.

According to one possible procedure, the remaining battery modules 50 of the battery unit 40 are heated via the starter battery 20 until all battery modules 50 have reached the predetermined second temperature level. Thereat, electric energy stored in the starter battery 20 is used to heat up the remaining battery modules 50 and hence, the state of charge of the starter battery 20 is reduced further.

According to another possible procedure, the remaining battery modules 50 of the battery unit 40 are heated via the selected group of battery modules 50 that have already reached the first temperature level, until all battery modules 50 have reached the predetermined second temperature level. Thereat, electric energy stored in the selected group of battery modules 50 is used to heat up the remaining battery modules 50 and hence, the state of charge of the selected group of battery modules 50 is reduced.

According to another possible procedure, the remaining battery modules 50 of the battery unit 40 are also heated via the selected group of battery modules 50 that have already reached the first temperature level. However, in particular thermal energy is transferred from the selected group of battery modules 50 to the remaining battery modules 50.

The second temperature level is predetermined such that the battery unit 40 has about 50% of maximum power when all battery modules 50 have reached the predetermined second temperature level. When 50% of the maximum power of the battery unit 40 is available, then the battery unit 40 can be operated, for example to drive an electric vehicle. The battery unit 40 will then be heated up further during such operation by thermal energy that arises within the battery modules 50.

After all battery modules 50 have reached the predetermined second temperature level, the battery modules 50 can be heated further via the starter battery 20. Hence, electric energy still stored in the starter battery 20 is used to heat the battery modules 50 of the battery unit 40 further.

Alternatively, after all battery modules 50 have reached the predetermined second temperature level, the starter battery 20 is charged via the battery unit 40. Hence, electric energy stored in the battery modules 50 of the battery unit 40 is used to charge the starter battery 20 that has lost electric energy during heating the battery modules 50.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Method for operating a battery system (10), comprising
a battery unit (40) with several battery modules (50) and
a starter battery (20) for heating the battery modules (50) of the battery unit (40), whereat
every battery module (50) is equipped with a separate heating element such that the battery modules (50) of the battery unit (40) can be heated separately, whereat
a group of battery modules (50) to be heated initially is selected by a managing unit (62) that comprises several counters, whereat a separate counter is assigned to every battery module (50) of the battery unit (40), whereat
when a certain battery module (50) is selected to the group of battery modules (50) to be heated initially, the counter assigned to this battery module (50) is incremented; whereat
the managing unit (62) considers the actual temperature of the battery modules (50), the actual state of charge of the battery modules (50) and the value stored in the counters which represent the frequency of former selections of the battery modules (50) when selecting the group of battery modules (50) to be heated initially;
the selected group of battery modules (50) is heated initially via the starter battery (20) until the selected group of battery modules (50) has reached a predetermined first temperature level; and
the remaining battery modules (50) are heated until all battery modules (50) have reached a predetermined second temperature level, whereat the first temperature level is equal to the second temperature level.

2. The method according to claim 1, whereat
the group of battery modules (50) to be heated initially comprises precisely one battery module (50).

3. The method according to one of the preceding claims, whereat
the remaining battery modules (50) are heated via the starter battery (20) until all battery modules (50) have reached the predetermined second temperature level.

4. The method according to one of the preceding claims, whereat
the remaining battery modules (50) are heated via the selected group of battery modules (50) until all battery modules (50) have reached the predetermined second temperature level.

5. The method according to one of the preceding claims, whereat
the second temperature level is predetermined such that the battery unit (40) has 50% of maximum power when all battery modules (50) have reached the predetermined second temperature level.

6. The method according to one of the preceding claims, whereat
after all battery modules (50) have reached the predetermined second temperature level,
the starter battery (20) is charged via the battery unit (40).

7. The method according to one of claims 1 to 5, whereat
after all battery modules (50) have reached the predetermined second temperature level,
the battery modules (50) are heated further via the starter battery (20).

8. The method according to one of the preceding claims, whereat
in the beginning, a status request of the battery modules (50) and the starter battery (20) is executed by the managing unit (62), whereat values of actual temperatures and actual state of charge are requested and stored in the managing unit (62).

9. The method according to one of the preceding claims, whereat
the group of battery modules (50) to be heated initially is selected by the managing unit (62) such that the battery modules (50) of the battery unit (40) are stressed evenly and homogenously.

10. Battery system (10), comprising
a battery unit (40) with several battery modules (50),
a starter battery (20) for heating the battery modules (50) of the battery unit (40), whereat
every battery module (50) is equipped with a separate heating element such that the battery modules (50) of the battery unit (40) can be heated separately, and
a control unit (60) for controlling and supervising the battery unit (40) and the starter battery (20),
**characterised in that**
the control unit (60) comprises a managing unit (62) that comprises several counters, whereat a separate counter is assigned to every battery module (50) of the battery unit (40), and
that is designed to execute the method according to one of the preceding claims.

11. Battery system (10), according to claim 10, **characterised in that**
the battery modules (50) comprise battery cells with solid electrolyte.

12. Battery system (10), according to one of claims 10 to 11,
**characterised in that**
the starter battery (20) comprises battery cells that are operable at temperatures below 0° C.

13. Usage of a method according to one of claims 1 to 9 and/or
usage of a battery system (10) according to one of claims 10 to 12 in an electric vehicle (EV), in a hybrid electric vehicle (HEV), in a plug-in hybrid vehicle (PHEV), in a stationary battery or in a battery in a marine application.

## Patentansprüche

1. Verfahren zum Betreiben eines Batteriesystems (10), das Folgendes umfasst:
eine Batterieeinheit (40) mit einigen Batteriemodulen (50) und
eine Starterbatterie (20) zum Erwärmen der Batteriemodule (50) der Batterieeinheit (40), wobei jedes Batteriemodul (50) mit einem getrennten Heizelement ausgestattet ist, so dass die Batteriemodule (50) der Batterieeinheit (40) getrennt erwärmt werden können, wobei
eine Gruppe anfänglich zu erwärmender Batteriemodule (50) durch eine Verwaltungseinheit (62) ausgewählt wird, die einige Zähler umfasst, wobei ein getrennter Zähler jedem Batteriemodul (50) der Batterieeinheit (40) zugewiesen ist, wobei,
wenn ein gewisses Batteriemodul (50) für die Gruppe anfänglich zu erwärmender Batteriemodule (50) ausgewählt wird, der diesem Batteriemodul (50) zugewiesene Zähler erhöht wird; wobei
die Verwaltungseinheit (62) die tatsächliche Temperatur der Batteriemodule (50), den tatsächlichen Ladungszustand der Batteriemodule (50) und den in den Zählern gespeicherten Wert, der die Häufigkeit vorheriger Auswahlen der Batteriemodule (50) repräsentiert, berücksichtigt, wenn die Gruppe anfänglich zu erwärmender Batteriemodule (50) ausgewählt wird;
die ausgewählte Gruppe von Batteriemodulen (50) anfänglich über die Starterbatterie (20) erwärmt wird, bis die ausgewählte Gruppe von Batteriemodulen (50) einen vorbestimmten ersten Temperaturpegel erreicht hat; und
die verbleibenden Batteriemodule (50) erwärmt werden, bis alle Batteriemodule (50) einen vorbestimmten zweiten Temperaturpegel erreicht haben, wobei der erste Temperaturpegel gleich dem zweiten Temperaturpegel ist.

2. Verfahren nach Anspruch 1, wobei
die Gruppe anfänglich zu erwärmender Batteriemodule (50) genau ein Batteriemodul (50) umfasst.

3. Verfahren nach einem der vorhergehenden Ansprüche, wobei die verbleibenden Batteriemodule (50) über die Starterbatterie (20) erwärmt werden, bis alle Batteriemodule (50) den vorbestimmten zweiten Temperaturpegel erreicht haben.

4. Verfahren nach einem der vorhergehenden Ansprüche, wobei
die verbleibenden Batteriemodule (50) über die ausgewählte Gruppe von Batteriemodulen (50) erwärmt werden, bis alle Batteriemodule (50) den vorbestimmten zweiten Temperaturpegel erreicht haben.

5. Verfahren nach einem der vorhergehenden Ansprüche, wobei
der zweite Temperaturpegel derart vorbestimmt wird, dass die Batterieeinheit (40) 50 % einer maximalen Leistung hat, wenn alle Batteriemodule (50) den vorbestimmten zweiten Temperaturpegel erreicht haben.

6. Verfahren nach einem der vorhergehenden Ansprüche, wobei,
nachdem alle Batteriemodule (50) den vorbestimmten zweiten Temperaturpegel erreicht haben,
die Starterbatterie (20) über die Batterieeinheit (40) geladen wird.

7. Verfahren nach einem der Ansprüche 1 bis 5, wobei, nachdem alle Batteriemodule (50) den vorbestimmten zweiten Temperaturpegel erreicht haben,
die Batteriemodule (50) weiter über die Starterbatterie (20) erwärmt werden.

8. Verfahren nach einem der vorhergehenden Ansprüche, wobei
am Anfang eine Statusanforderung der Batteriemodule (50) und der Starterbatterie (20) durch die Verwaltungseinheit (62) ausgeführt wird, wobei Werte tatsächlicher Temperaturen und eines tatsächlichen Ladungszustands angefordert und in der Verwaltungseinheit (62) gespeichert werden.

9. Verfahren nach einem der vorhergehenden Ansprüche, wobei
die Gruppe anfänglich zu erwärmender Batteriemodule (50) derart durch die Verwaltungseinheit (62) ausgewählt wird, dass die Batteriemodule (50) der Batterieeinheit (40) gleichmäßig und homogen belastet werden.

10. Batteriesystem (10), das Folgendes umfasst:
eine Batterieeinheit (40) mit einigen Batteriemodulen (50),
eine Starterbatterie (20) zum Erwärmen der Batteriemodule (50) der Batterieeinheit (40), wobei jedes Batteriemodul (50) mit einem getrennten Heizelement ausgestattet ist, so dass die Batteriemodule (50) der Batterieeinheit (40) getrennt erwärmt werden können, und
eine Steuereinheit (60) zum Steuern und Überwachen der Batterieeinheit (40) und der Starterbatterie (20),
**dadurch gekennzeichnet, dass**
die Steuereinheit (60) eine Verwaltungseinheit (62) umfasst,
die einige Zähler umfasst, wobei ein getrennter Zähler jedem Batteriemodul (50) der Batterieeinheit (40) zugewiesen ist, und
die zum Ausführen des Verfahrens nach einem der vorhergehenden Ansprüche gestaltet ist.

11. Batteriesystem (10) nach Anspruch 10, **dadurch gekennzeichnet, dass** die Batteriemodule (50) Batteriezellen mit einem festen Elektrolyten umfassen.

12. Batteriesystem (10) nach einem der Ansprüche 10 bis 11,
**dadurch gekennzeichnet, dass**
die Starterbatterie (20) Batteriezellen umfasst, die bei Temperaturen unterhalb von 0 °C funktionsfähig sind.

13. Verwendung eines Verfahrens nach einem der Ansprüche 1 bis 9 und/oder Verwendung eines Batteriesystems (10) nach einem der Ansprüche 10 bis 12 in einem Elektrofahrzeug (EV), in einem Hybridelektrofahrzeug (HEV), einem Plug-In-Hybridfahrzeug (PHEV), in einer stationären Batterie oder in einer Meeresanwendung.

## Revendications

1. Procédé pour faire fonctionner un système de batterie (10), comprenant
une unité de batterie (40) ayant plusieurs modules de batterie (50) et
une batterie de démarrage (20) pour chauffer les modules de batterie (50) de l'unité de batterie (40), dans lequel
chaque module de batterie (50) est équipé d'un élément chauffant distinct de telle sorte que les modules de batterie (50) de l'unité de batterie (40) puissent être chauffés de manière séparée, dans lequel
un groupe de modules de batterie (50) qui doivent être initialement chauffés, est sélectionné par une unité de gestion (62) qui comprend plusieurs compteurs, dans lequel
un compteur distinct est attribué à chaque module de batterie (50) de l'unité de batterie (40), dans lequel
lorsqu'un certain module de batterie (50) est sélectionné dans le groupe de modules de batterie (50) qui doivent être initialement chauffés, le compteur attribué à ce module de batterie (50) est incrémenté ; dans lequel
l'unité de gestion (62) considère que la température actuelle des modules de batterie (50), l'état actuel de charge des modules de batterie (50) et la valeur stockée dans les compteurs qui représentent la fréquence de précédentes sélections des modules de batterie (50) lors de la sélection du groupe de modules de batterie (50) qui doivent être initialement chauffés ;
le groupe sélectionné de modules de batterie (50) est chauffé initialement par le biais de la batterie de démarrage (20) jusqu'à ce que le groupe sélectionné de modules de batterie (50) ait atteint un premier niveau de température prédéterminé ; et
les modules de batterie restants (50) sont chauffés jusqu'à ce que tous les modules de batterie (50) aient atteint un second niveau de température prédéterminé, dans lequel le premier niveau de température est égal au second niveau de température.

2. Procédé selon la revendication 1, dans lequel
le groupe de modules de batterie (50) qui doivent être initialement chauffés, comprend précisément un seul module de batterie (50).

3. Procédé selon l'une des revendications précédentes, dans lequel
les modules de batterie restants (50) sont chauffés par le biais de la batterie de démarrage (20) jusqu'à ce que tous les modules de batterie (50) aient atteint le second niveau de température prédéterminé.

4. Procédé selon l'une des revendications précédentes, dans lequel
les modules de batterie restants (50) sont chauffés par le biais du groupe sélectionné de modules de batterie (50) jusqu'à ce que tous les modules de batterie (50) aient atteint le second niveau de température prédéterminé.

5. Procédé selon l'une des revendications précédentes, dans lequel
le second niveau de température est prédéterminé de telle sorte que l'unité de batterie (40) présente 50 % de la puissance maximale lorsque tous les modules de batterie (50) ont atteint le second niveau de température prédéterminé.

6. Procédé selon l'une des revendications précédentes, dans lequel
après que tous les modules de batterie (50) ont atteint le second niveau de température prédéterminé,
la batterie de démarrage (20) est chargée par le biais de l'unité de batterie (40).

7. Procédé selon l'une des revendications 1 à 5, dans lequel
après que tous les modules de batterie (50) ont atteint le second niveau de température prédéterminé,
les modules de batterie (50) sont davantage chauffés par le biais de la batterie de démarrage (20) .

8. Procédé selon l'une des revendications précédentes, dans lequel
au début, une demande d'état des modules de batterie (50) et de la batterie de démarrage (20) est exécutée par l'unité de gestion (62), dans lequel
des valeurs de températures actuelles et d'un état actuel de charge sont demandées et stockées dans l'unité de gestion (62).

9. Procédé selon l'une des revendications précédentes, dans lequel
le groupe de modules de batterie (50) qui doivent être initialement chauffés, est sélectionné par l'unité de gestion (62) de telle sorte que les modules de batterie (50) de l'unité de batterie (40) soient contraints de manière égale et homogène.

10. Système de batterie (10) comprenant
une unité de batterie (40) ayant plusieurs modules de batterie (50),
une batterie de démarrage (20) pour chauffer les modules de batterie (50) de l'unité de batterie (40), dans lequel
chaque module de batterie (50) est équipé d'un élément chauffant distinct de telle sorte que les modules de batterie (50) de l'unité de batterie (40) puissent être chauffés de manière séparée, et une unité de commande (60) pour commander et surveiller l'unité de batterie (40) et la batterie de démarrage (20),
**caractérisé en ce que**
l'unité de commande (60) comprend une unité de gestion (62)
qui comprend plusieurs compteurs, dans lequel un compteur distinct est attribué à chaque module de batterie (50) de l'unité de batterie (40), et qui est conçue pour exécuter le procédé selon l'une des revendications précédentes.

11. Système de batterie (10), selon la revendication 10, **caractérisé en ce que**
les modules de batterie (50) comprennent des cellules de batterie ayant un électrolyte solide.

12. Système de batterie (10), selon l'une des revendications 10 à 11,
**caractérisé en ce que**
la batterie de démarrage (20) comprend des cellules de batterie qui peuvent fonctionner à des températures inférieures à 0 °C.

13. Utilisation d'un procédé selon l'une des revendications 1 à 9 et/ou
utilisation d'un système de batterie (10) selon l'une des revendications 10 à 12 dans un véhicule électrique (EV), dans un véhicule électrique hybride (HEV), dans un véhicule hybride enfichable (PHEV), dans une batterie fixe ou dans une batterie dans une application marine.
